# DEMANDE DE BREVET EUROPEEN

(11) **EP 4 480 659 A1**
(43) Date de publication de la demande: **25.12.2024**
(21) Numéro de dépôt: 23305993.0
(22) Date de dépôt: 22.06.2023
(51) Int. Cl.: B28C 9/00, B03B 9/06, B08B 17/02, B01D 21/00, C02F 1/00

(54) **CENTRALE MOBILE DE PRODUCTION DE BETON**

(71) Demandeur: FEHR Groupe, 67100 Reichshoffen (FR)
(72) Inventeur: FEHR, Pierre, 67500 HAGUENAU (FR)
(74) Mandataire: Kessler, Marc

(57) **Abrégé**

La présente invention se rapporte à une centrale (1) mobile de production de béton et de distribution dudit béton à un ou plusieurs matériels de manutention et/ou de transport de béton, ladite centrale (1) comprenant des moyens de production de béton et des moyens (11) de recyclage des eaux de ruissellement et/ou des eaux de lavage desdits moyens de production de béton et desdits matériels de manutention et/ou de transport de béton, lesdits moyens (11) de recyclage des eaux étant mobiles, et formant tout ou partie des fondations (10) de ladite centrale (1) mobile. L'invention porte également sur une méthode de réalisation d'une telle centrale (1) mobile, et à l'utilisation d'une telle centrale (1) mobile pour la fabrication et la distribution de béton prêt à l'emploi.

## Description

### Objet de l'invention

La présente invention a trait à une centrale mobile de production et de distribution de béton comprenant des moyens de production de béton, ainsi que des moyens de recyclage des eaux de ruissellement et/ou des eaux de lavage de la centrale mobile et/ou de lavage des moyens de manutention et/ou de transport de béton et à une méthode de réalisation d'une telle centrale de production et de distribution de béton.

### Etat de la technique

Dans le domaine de la construction, qu'il s'agisse du secteur du bâtiment ou celui des travaux publics, les éléments de construction mis en oeuvre, comme par exemple des piliers, des murs ou des dalles, sont généralement réalisés en béton, ou comprennent du béton, un matériau bien connu, qui est un assemblage d'eau, de granulats ou agrégats, tels que des graviers, gravillons ou du sable, avec un liant, comme par exemple du ciment, du bitume ou de l'argile, et souvent également des adjuvants, modifiant les propriétés physiques et chimiques du mélange final.

Même si ces éléments de construction peuvent être préfabriqués en usine, et donc être prêts à l'emploi, puis transportés sur le chantier, ils sont plus généralement réalisés sur le lieu du chantier, ce qui nécessite de transporter le béton depuis une centrale fixe de production de béton, qui peut se trouver à grande distance du ou des chantiers, ce qui entraine d'important coûts de transport et impacte négativement l'avancement des chantiers.

Il a alors été proposé des centrales mobiles de production de béton, qui sont transportées et assemblées à proximité d'un chantier, puis démontées à la fin dudit chantier, pour être transportées et réassemblées à proximité d'un autre chantier.

Par exemple, le document EP0468827 décrit une station mobile de malaxage, montée sur un châssis de transport, pouvant être utilisée en association avec une unité mobile de stockage d'agrégats, et au moins un silo à ciment mobile, ainsi que des moyens de stockage et de distribution d'eau et des moyens de stockage et de distribution d'adjuvants.

Certaines des centrales mobiles sont pourvues de moyens de recyclage du surplus de béton produit.

Par exemple, le document WO2021183174 décrit une centrale mobile et modulaire de production de béton, comprenant une pluralité d'unités individuelles, montées sur patins, comprenant chacune divers moyens complémentaires nécessaires à la production du béton, et qui sont connectées fonctionnellement entre elles. La centrale à béton ne comprend pas de bassins de décantation, mais comprend des moyens de recyclage du béton frais inutilisé, pourvus au niveau de l'unité d'alimentation en eau de la centrale. Ces moyens de recyclage de béton humide comprennent un tamis à granulats et un tamis à sable, surplombant un réservoir de rétention, qui fait partie du réservoir principal d'eau, et une pompe pour transférer l'eau recyclée du réservoir de rétention vers le réservoir principal de l'unité d'alimentation en eau.

Le processus de fabrication de béton nécessite un nettoyage régulier des moyens de production mis en oeuvre, afin de garantir leur durée de vie sur le long terme, mais également, afin de permettre la production de différentes natures de béton, en réduisant ou éliminant les contaminations d'un béton à l'autre.

Par exemple, le document CN103601259 décrit une installation de production de béton comprenant des moyens de recyclage des eaux de lavage du malaxeur de l'installation. Ces moyens comprennent un dispositif de guidage des eaux de lavage pourvu sous le malaxeur, qui guide l'eau de lavage vers un dispositif de traitement, comprenant un réservoir amovible, muni d'un filtre et d'une pompe. L'eau traitée est évacuée vers un dispositif de dosage des eaux usées, disposé en partie haute de l'installation et qui est connecté au malaxeur pour une réutilisation de l'eau dans la production de béton.

Par ailleurs, les matériels de manutention et de transport de béton, notamment les véhicules pompes ou les véhicules de transport amenant le béton sur les chantiers, nécessitent également d'être nettoyés périodiquement, afin de garantir leur bon fonctionnement sur le long terme et de réduire les risques de contamination entre les différents types de béton produits par une centrale à béton.

Les centrales de production de béton ne proposent pas de solutions pour la récupération et le recyclage des eaux de ruissellement et/ou des effluves de lavage de tels matériels de manutention et/ou de transport du béton, le nettoyage de ces matériels se faisant généralement dans des stations de lavage dédiées, distinctes des centrales de production de béton.

Toutefois, pour les bétonnières, le document FR2192489 décrit une station de lavage de leur cuves de malaxage, la station comprenant une charpente regroupant un bac de réception et de dilution des boues de béton, une pompe de relevage des boues vers une trémie de stockage et de décantation, disposée au-dessus du bac de réception et associée à une pluralité de bacs de décantation en cascade permettant une deuxième décantation de l'eau avant de passer sur un filtre, puis d'être stockée dans un réservoir de stockage disposé au-dessus de la trémie de stockage et de décantation. L'eau recyclée est ensuite réutilisée pour la dilution des boues de béton dans le bac de réception, ou pour le lavage des cuves des bétonnières.

Outre le fait d'être onéreuse, en termes de quantité d'eau consommée, de telles stations de lavage dédiées présentent l'inconvénient d'être volumineuses, d'avoir une empreinte au sol importante, et d'être, par conséquent, installées loin des chantiers, ce qui présente l'inconvénient supplémentaire d'être chronophage et peu économique, les véhicules de transport du béton étant indisponibles le temps de leur lavage, ce qui impacte négativement l'avancement des chantiers.

### Buts de l'invention

La présente invention vise à fournir une centrale mobile de production et de distribution de béton, et une méthode de réalisation d'une telle centrale, qui ne présentent pas les inconvénients de l'état de la technique.

La présente invention vise à fournir une alternative aux solutions de l'état de la technique existantes.

La présente invention vise à fournir une centrale mobile de production et de distribution de béton, qui soit facilement transportable, autonome dans son fonctionnement, qui soit équipée des moyens de production de béton des centrales fixes de production, tout en proposant une solution pour la récupération et le recyclage des eaux de ruissellement et/ou des effluves de lavage de tout ou partie des moyens de production de béton et des matériels de manutention et/ou de transport du béton, notamment les véhicules pompes ou les véhicules de transport amenant le béton sur les chantiers.

La présente invention vise à fournir une méthode de réalisation d'une centrale mobile de production et de distribution de béton, qui soit facile à mettre en oeuvre et peu chronophage.

### Résumé de l'invention

La présente invention porte sur une centrale mobile de fabrication de béton et de distribution du béton à un ou plusieurs matériels de manutention et/ou de transport de béton, la centrale comprenant des moyens de production de béton et des moyens de recyclage des eaux de ruissellement et/ou des eaux de lavage des moyens de production de béton et des matériels de manutention et/ou de transport de béton, les moyens de recyclage des eaux étant mobiles, et formant tout ou partie des fondations de la centrale mobile.

Selon des modes particuliers de l'invention, la centrale mobile selon l'invention comprend au moins une, ou une combinaison quelconque appropriée, des caractéristiques suivantes :
- les moyens de recyclage des eaux sont aptes à recevoir des matériels et/ou des moyens de manutention et/ou de transport de béton, et forment un ou plusieurs chemins carrossables,
- les moyens de recyclage des eaux comprennent des moyens de criblage de particules solides contenues dans les eaux à recycler,
- les moyens de criblage sont ou comprennent un ou plusieurs panneaux rigides, comprenant un ou plusieurs orifices pour le passage des eaux dans les moyens de recyclage des eaux,
- les moyens de recyclage des eaux comprennent des moyens de réception et de décantation des eaux, qui forment tout ou partie des fondations de la centrale mobile,
- la centrale mobile comprend une première série de moyens de réception et de décantation des eaux, disposés bord à bord les uns avec les autres, et un ou plusieurs autres moyens de réception et de décantation des eaux étant disposés et s'étendant perpendiculairement à la première série de moyens de réception et de décantation,
- les moyens de réception et de décantation des eaux sont connectés entre eux en série par des moyens de mise en communication de fluide,
- les moyens de réception et de décantation des eaux comprennent des moyens d'accélération de la décantation desdites eaux,
- les moyens de réception et de décantation des eaux comprennent un ou plusieurs bacs,
- les moyens de production de béton sont regroupés sous une enceinte, s'étendant au-dessus des moyens de recyclage des eaux,
- l'enceinte comprend une base, comprenant une ossature comprenant des poutres structurelles formant un cadre et des poutrelles de contreventement, l'ossature reposant, coopérant, ou étant fixée de manière réversible, à une ou plusieurs dalles de support, faisant parties, ou coopérant, avec les fondations de la centrale mobile.

La présente invention porte également sur l'utilisation de la centrale mobile selon l'invention, pour la fabrication et la distribution de béton prêt à l'emploi et le recyclage des eaux de ruissellement et/ou des eaux de lavage de tout ou une partie des moyens de production de béton et/ou des moyens de manutention et/ou de transport de béton.

La présente invention porte en outre sur une méthode de réalisation de la centrale mobile de production de béton et de distribution du béton selon l'invention comprenant les étapes de : prendre des moyens de recyclage des eaux de ruissellement et/ou des eaux de lavage qui sont mobiles, et les disposer sur le sol, ou dans un terrassement préalablement réalisé dans le sol, afin que tout ou partie des moyens de recyclage forme tout ou partie des fondations de la centrale (1) mobile, de prendre des moyens de production et de distribution de béton, et les assembler sur tout ou partie des fondations, de façon à former tout ou partie de la centrale mobile.

Dans un mode de réalisation particulier de la méthode selon l'invention de réalisation de la centrale mobile selon l'invention, les moyens de recyclage des eaux comprennent des moyens de réception et de décantation des eaux de ruissellement et/ou des eaux de lavage de tout ou partie des moyens de production de béton et/ou des matériels de manutention et/ou de transport de béton, la méthode comprenant en outre une étape de mise en communication de fluide des moyens de réception et de décantation des eaux entre eux.

### Brève description des figures

La figure 1 est une représentation schématique d'une vue en perspective d'un mode de réalisation particulier de la centrale mobile de fabrication et de distribution de béton selon l'invention.
La figure 2 est une représentation schématique d'une vue en perspective du mode de réalisation particulier de la centrale mobile de fabrication et de distribution de béton, représenté à la figure 1, comprenant des moyens de criblage.
La figure 3 est une autre représentation schématique tronquée, selon une autre perspective, de la centrale mobile de fabrication et de distribution de béton représentée à la figure 2.

### Description détaillée de l'invention

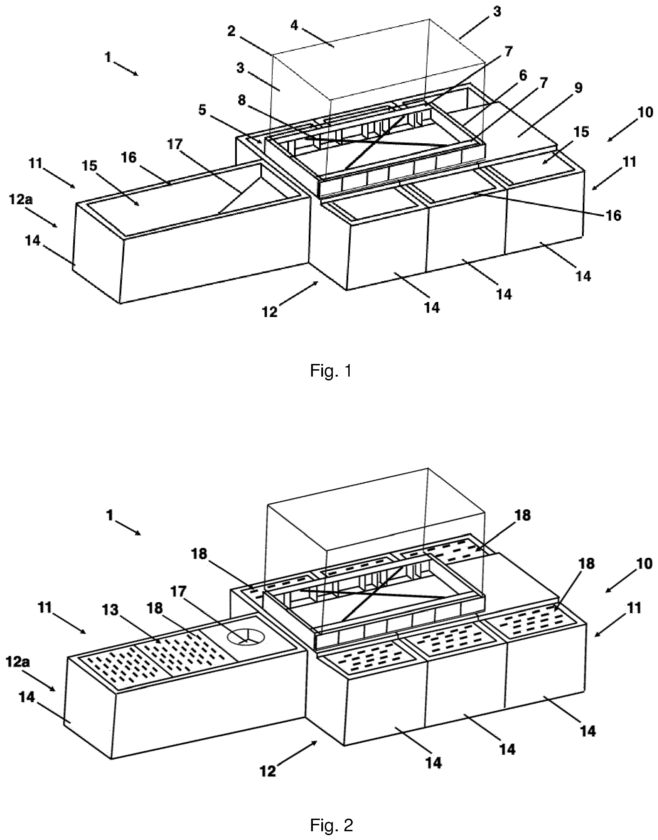

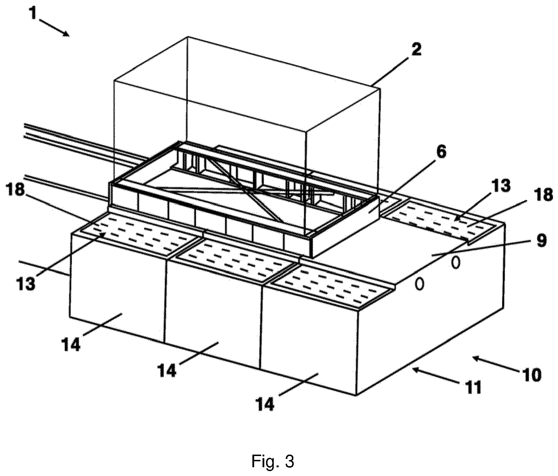

Dans la suite de la description et des revendications, les termes « haut », « bas », « au-dessus », « en dessous », « supérieur », « inférieur », « vertical », « verticalement » et « horizontal », « horizontalement » font référence à la position normale des éléments qui constituent la centrale de production de béton, et en particulier à leur position et agencement, tels que représentés aux figures1 à 3, et tels que définis par le référentiel XYZ représenté sur les figures.

La centrale 1 de fabrication et de distribution de béton selon l'invention est dite « mobile », car elle peut être assemblée et désassemblée, déplacée et transportée, d'une localisation géographique à une autre. Elle comprend, ou est faite, d'un ensemble de moyens mobiles, qui sont de préférence agencés et/ou regroupés en unités distinctes mobiles. Ces moyens, ou unités, sont transportables, assemblables ou desassemblables, les uns avec les autres.

La centrale 1 mobile selon l'invention comprend des moyens de production et de distribution de béton, qui, de préférence, comprennent ou coopèrent avec, des moyens de stockage des matières premières entrant dans la constitution du béton produit, des moyens de distribution et/ou de convoyage des matières premières vers des moyens de malaxage, des moyens de pesage des matières premières, des moyens de malaxage des matières premières mélangées, des moyens de distribution du béton produit, et éventuellement des moyens de stockage du béton produit. Elle peut, en outre, comprendre ou coopérer avec des moyens de commande du fonctionnement des différents moyens qui la constituent, afin de lui permettre de fonctionner de manière autonome ou semi-autonome.

De préférence, les moyens de production de béton, et avantageusement également les moyens de commande du fonctionnement des différents moyens, sont agencés entre eux et regroupés sous une enceinte 2, un bâti, s'étendant verticalement et horizontalement, au-dessus des moyens 11 de recyclage des eaux de la centrale mobile 1. L'enceinte comprend une ou plusieurs parois 3 latérales, et éventuellement également un toit 4, éventuellement isolés thermiquement et/ou acoustiquement et protégeant les moyens de la centrale 1 mobile selon l'invention des éléments climatiques extérieurs.

L'enceinte 2 comprend, ou coopère avec, une base 5 de support, soutenant l'enceinte 2 et/ou tout ou partie des moyens formant la centrale 1 mobile selon l'invention. De préférence, cette base 5 est, comprend, ou coopère avec, une ossature 6 qui, avantageusement, comprend ou est faite en métal et/ou en béton. De préférence, l'ossature 6 comprend des poutres 7 structurelles pour former un cadre de support, ayant des dimensions et une forme adaptée à l'enceinte 2 et à la centrale 1 mobile. Les poutres 7 peuvent être, par exemple, longitudinales et transversales pour un cadre de forme sensiblement parallélépipédique. Avantageusement, l'ossature 6 comprend une ou plusieurs poutrelles 8 de contreventement, permettant la rigidification de l'ossature 6. Dans un mode de réalisation particulier, les poutrelles 8 relient les deux poutres 7 longitudinales l'une à l'autre pour former une croix de contreventement.

De préférence, les poutres 7 de l'ossature et/ou les poutrelles 8 de contreventement ont, avantageusement, les unes indépendamment des autres, une section transversale plan, en « U » ou en « H ».

De préférence, l'ossature 6 repose, coopère, ou est fixée de manière réversible, à une ou plusieurs dalles 9 de support, qui font parties ou coopèrent avec les fondations 10 de la centrale mobile 1.

Les moyens de stockage des matières premières peuvent être, ou comprendre, un ou plusieurs silos, réservoirs, bassins, trémies, et une combinaison de ceux-ci.

Les moyens de distribution et/ou de convoyage des matières premières peuvent être ou comprendre une ou plusieurs convoyeurs, vis sans fin, canalisations, conduites, pompes, vannes, et une combinaison de ceux-ci.

Les moyens de pesage des matières premières peuvent être ou comprendre un ou plusieurs tapis de transport peseur, une ou plusieurs bennes ou trémies de pesage et une combinaison de ceux-ci.

Les moyens de malaxage des matières premières mélangées sont ou comprennent un ou plusieurs malaxeurs, de type planétaire, conique ou linéaire, horizontal ou vertical.

Les moyens de distribution du béton produit sont ou comprennent une ou plusieurs canalisations, conduites, pompes, vannes et une combinaison de ceux-ci.

Les moyens de distribution du béton produit sont, de préférence, pourvus sur un coté de la centrale 1 mobile selon l'invention, un coté de son enceinte 2, au niveau d'une zone de chargement en béton pour les matériels de manutention et/ou de transport du béton produit.

De préférence, la centrale 1 mobile selon l'invention comprend en outre des moyens de lavage d'un ou plusieurs moyens de production de béton et/ou des moyens de manutention et/ou de transport de béton. Ces moyens de lavage comprennent ou coopèrent avec une source d'eau, de préférence d'eau recyclée, des moyens d'acheminement de l'eau vers tout ou partie des moyens de production de béton et/ou des matériels de manutention et/ou de transport du béton produit, et comprennent des canalisations, des conduites, des moyens d'aspersion, des buses, des tuyaux, et une combinaison de ceux-ci.

La centrale 1 mobile selon l'invention comprend en outre des moyens 11 de recyclage des eaux de ruissellement et/ou des eaux de lavage de tout ou partie de la centrale 1 mobile, de l'intérieur et/ou l'extérieur de l'enceinte 2, de tout ou partie des moyens qui la composent, et/ou des matériels de manutention et/ou de transport de béton. Cela présente l'avantage d'éviter le rejet des eaux souillées dans l'environnement, et de fournir une solution tout-en-un, sur un même site géographique, qui regroupe la production de béton et la distribution du béton produit, avec le recyclage des eaux, une solution qui soit mobile, démontable et transportable.

De préférence, les moyens 11 de recyclage comprennent, ou coopèrent avec, des moyens de collecte de l'eau recyclée pour qu'elle soit ré-utilisée, de préférence en circuit fermé, avantageusement de préférence par les moyens de lavage. Cela présente également l'avantage d'économiser l'eau. De préférence, les moyens 11 de recyclage comprennent, ou coopèrent avec, également des moyens de récupération des particules solides contenues dans les eaux à recycler.

Ces moyens 11 de recyclage des eaux sont mobiles. Ils coopèrent, de préférence sont associés à, et dissociés, d'une centrale 1 mobile selon l'invention, et peuvent être transportables d'une localisation à une autre localisation. Ces moyens 11 de recyclage sont de préférence polyvalents. Ils présentent l'avantage de pouvoir, après leur démontage d'une centrale 1 mobile, d'être associés à la même centrale 1 mobile selon l'invention avec laquelle ils étaient associés, mais à une autre localisation géographique, à une autre centrale 1 mobile selon l'invention que celle à laquelle elle était préalablement associée, ou bien toute autre centrale de fabrication et de distribution de béton, de conception et de forme différentes de celle selon l'invention.

Les moyens 11 de recyclage des eaux sont, de préférence, disposés en partie basse de la centrale 1 mobile selon l'invention, avantageusement, pour au moins une partie d'entre eux, en-dessous des moyens de production de béton.

Les moyens 11 de recyclage des eaux sont, ou forment, tout ou partie des fondations 10 de la centrale 1 mobile selon l'invention, à laquelle ils sont associées ou avec laquelle ils coopèrent. Cela présente l'avantage de fournir une centrale 1 mobile compacte et donc de réduire son empreinte au sol.

De préférence, les moyens 11 de recyclage des eaux sont agencés entre eux de manière à également s'étendre horizontalement au-delà de l'enceinte 2 de la centrale 1 mobile, en particulier sa base 5 de support, pour l'entourer, avantageusement la ceinturer, partiellement ou entièrement, ce qui présente l'avantage de maximiser la quantité des eaux récupérées.

De préférence, les moyens 11 de recyclage des eaux sont dits « carrossables » car ils sont aptes à recevoir, et en fonctionnement ils reçoivent, des matériels ou moyens de manutention et/ou de transport de béton, et forment un ou plusieurs chemins carrossables, pouvant être empruntés par lesdits matériels, soit pour charger du béton frais et/ou pour y être lavés. Cela participe également à fournir une centrale 1 mobile compacte.

Les moyens 11 de recyclage des eaux comprennent des moyens 12 de réception des eaux de ruissellement et/ou des eaux de lavage, aptes à recevoir, et en fonctionnement, recevant les eaux de lavage de tout ou partie des moyens de production de béton, par exemple du malaxeur, des eaux de ruissellement de l'enceinte 2, des eaux de lavage des matériels de manutention et/ou de transport de béton, que les eaux pour le lavage proviennent de la centrale 1 mobile selon l'invention ou d'un réservoir associé aux matériels de manutention et/ou de transport du béton camions. Ces moyens 12 de réception des eaux sont de préférence identiques ou similaires, entre eux, en termes de formes, de dimensions et de nature.

De préférence, il est prévu un ou plusieurs moyens 12a de réception des eaux de lavage du ou des matériels de manutention et/ou de transport de béton, qui est distinct d'un ou plusieurs autres moyens 12 de réception des eaux de lavage des moyens formant la centrale 1 mobile.

Les moyens 11 de recyclage des eaux comprennent des moyens de décantation des eaux, qui, de préférence, sont identiques ou similaires, en termes de formes, de dimensions et de nature, aux moyens 12, 12a de réception des eaux. De préférence, les moyens 12, 12a de réception sont également les moyens de décantation.

Afin de récupérer les eaux de pluie qui ruissellent sur l'enceinte 2 de la centrale 1 mobile, les moyens 12, 12a de réception des eaux comprennent, ou coopèrent, avec des moyens de récupération de ces eaux de pluie, des moyens qui comprennent par exemple une ou plusieurs gouttières et une ou plusieurs canalisations, disposées sur, ou coopérant avec, les parois 3 latérales et/ou le toit 4 de l'enceinte 2.

De préférence, les moyens 11 de recyclage comprennent, ou coopèrent avec, des moyens de mise en communication de fluide, des différents moyens 12, 12a de réception et/ou de décantation des eaux, qui permettent de connecter en série les moyens 12,12a de réception des eaux, pour permettre ainsi une décantation en série et donc d'affiner la décantation.

De préférence, les moyens 11 de recyclage comprennent, ou coopèrent avec, des moyens de neutralisation de l'eau recyclée.

De préférence, les moyens 11 de recyclage, en particulier tout ou partie des moyens 12, 12a de réception des eaux, comprennent ou coopèrent avec des moyens 13 de criblage empêchant des particules solides de grande taille de pénétrer dans les moyens 12, 12a de réception, ce qui permet de garantir le bon fonctionnement des moyens 11 de recyclage. Ces moyens 13 de criblage comprennent, ou coopèrent avec, par exemple un ou plusieurs grillages, grilles ou tamis.

De préférence, les moyens 12, 12a de réception des eaux sont, ou comprennent, au moins un bac 14, de préférence une multitude de bacs 14, avantageusement autant de bacs 14 que nécessaire, permettant la réception et la réception et la rétention des eaux, et ayant une forme et des dimensions adaptées à la quantité des eaux à recevoir et recycler, et adaptées à la forme et les dimensions de la centrale 1 mobile.

Dans ces modes de réalisation, le ou les bacs 14, ont des formes et des dimensions identiques ou équivalentes entre eux. Cela présente l'avantage d'avoir des moyens 12, 12a de réception des eaux qui soient interchangeables et peuvent être utilisés ou disposés différemment d'une centrale 1 mobile à une autre centrale 1 mobile.

De préférence, le ou les bacs 14 comprennent, ou sont faits, de métal et/ou béton, ce qui présente l'avantage de permettre de supporter la charge et les contraintes mécanique de la centrale 1 mobile. Le ou les bacs 14 comprennent au moins une paroi, de préférence une multitude de parois, formant un espace intérieur 15, et au moins une ouverture supérieure 16 par laquelle les eaux pénètrent dans l'espace intérieur 15.

De préférence, l'espace intérieur 15 peut être muni, ou pas, de moyens d'accélération de la décantation des eaux à recycler. Ces moyens peuvent être ou comprendre une rampe 17 inclinée permettant un écoulement amélioré des particules solides présentes dans les eaux, par effet de gravité.

Les surfaces internes et/ou externes des parois des bacs 14 peuvent éventuellement comprendre ou être revêtues d'un matériau ou mélange de matériaux, revêtement ou film, d'étanchéité, en particulier à l'eau.

De préférence, les moyens 13 de criblage des moyens 11 de recyclage participent, ou permettent, aux moyens 11 de recyclage de recevoir les matériels ou moyens de manutention et/ou de transport de béton, d'être carrossables.

Les moyens 13 de criblage sont ou comprennent, de préférence, un ou plusieurs panneaux 18 rigides, comprenant un ou plusieurs orifices, de taille et de forme identiques ou différentes entre eux, permettant le passage des eaux dans les moyens 12, 12a de réception des eaux. Ces orifices permettent également un contrôle visuel de l'espace intérieur 15 de chaque bac 14, et donc un contrôle de leur niveau de remplissage et de l'avancement du phénomène de décantation.

De préférence, ce ou ces panneaux 18 rigides sont supportés par un ou plusieurs poutres porteuses, rigides, faites ou comprenant du métal et/ou du béton, s'étendant sensiblement horizontalement et longitudinalement et/ou transversalement de part et d'autre de l'ouverture supérieure 16 du ou des bacs 14, des poutres ayant une forme et des dimensions adaptées à la forme et aux dimensions du ou des bacs, et ayant avantageusement une section transversale en « U » ou en « H », afin de leur conférer une résistance accrue à des charges exerçant des forces de poussées.

Dans un mode de réalisation préféré de l'invention, représenté aux figures 1 à 3, les moyens 11 de recyclage comprennent quatre bacs 14, de forme parallélépipèdique rectangle. Néanmoins, selon la taille de la centrale 1 mobile selon l'invention, les moyens 11 de recyclage peuvent comprendre plus de quatre bacs 14, de préférence autant que nécessaire, avantageusement d'une forme et de dimensions compatibles ou adaptées à la centrale 1 mobile.

Les bacs 14 de forme parallélépipèdique, comprennent deux bords latéraux et deux extrémités, et possèdent des dimensions sensiblement identiques. Au moins une première série de bacs est disposée bord à bord, les bacs14 étant adjacents les uns à côté des autres, une paroi longitudinale de l'un étant accolée, de préférence en contact, avec la paroi longitudinale d'un autre, et faisant office de fondations pour la centrale 1 mobile.

Des moyens 11 de recyclage, en particulier des moyens 12, 12a de réception des eaux, disposés bord à bord, présentent l'avantage de fournir plusieurs points d'appui et donc une fondation 10 stable à la centrale 1 mobile. De préférence, les parois latérales des bacs 14 formant fondations supportent la ou les dalles 9 de support, en métal et/ou en béton, disposée transversalement sur les bacs 14 adjacents, et sur laquelle est disposée, ou fixée, l'enceinte 2, avantageusement l'ossature 6 reposant sur la ou les dalles 9 de support.

Un ou plusieurs autres moyens 11 de recyclage, en particulier des moyens 12, 12a de réception des eaux, un ou plusieurs autres bacs 14, peuvent être disposés, et s'étendre, perpendiculairement aux autres bacs 14, de préférence une de les extrémités étant en contact avec un bord d'un des bacs 14, ce qui permet de garder la compacité de la centrale 1 mobile.

Une disposition différente des moyens 12, 12a de réception des eaux, des bacs 14, l'un ou les uns par rapport aux autres, présente l'avantage de pouvoir dissocier, et optimiser, l'utilisation de chaque bacs 14, qui peuvent ainsi être réservés chacun à une utilisation particulière. Par exemple, un ou plusieurs bacs 14, disposés perpendiculairement à la série de autres bacs 14 côte à côte, peuvent être utilisés principalement pour le recyclage, et donc la réception, des eaux de lavage des matériels de manutention et/ou de transport de béton et éventuellement également les eaux de lavage d'un ou plusieurs moyens de la centrale 1 mobile, par exemple le malaxeur, et les autres bacs 14 permettant le recyclage des eaux de pluies et/ou de ruissellement, en particulier de l'enceinte 2.

De préférence, le ou les moyens 12, 12a de réception des eaux, en particulier le ou les bacs 14, disposés perpendiculairement, peuvent également comprendre des moyens 13 de criblage adaptés, et donc différents de ceux des bacs 14 formant fondation 10, à savoir par exemple une plaque en métal et/ou béton munie d'une ouverture, par exemple circulaire, comme cela est représenté en figure 2.

De préférence, les moyens 11 de recyclage, en particulier les moyens 12, 12a de réception des eaux, les bacs 14, sont munis, dans leur espace intérieur 15, d'un ou plusieurs moyens d'accélération de la décantation des eaux, par exemple une rampe inclinée 17, en métal et/ou en béton, disposée de préférence longitudinalement, le long du bac 14 dans lequel elle est installée, et s'étendant depuis la partie supérieure et l'extrémité du bac 14 recevant les eaux à recycler, vers la partie inférieure et son extrémité opposée. Cela permet de faciliter et d'accélérer la décantation, et de facilité la récupération des particules solides. De préférence, la rampe inclinée 17 équipe le ou les bacs 14 destinés à recevoir les eaux à recycler contenant le plus de particules solide à décanter. Il peut s'agir, par exemple, du ou des bacs 14 disposés perpendiculairement aux bacs 14 formant les fondations 10.

Les moyens 12, 12a de réception des eaux, en particulier les bacs 14, qu'ils forment la fondation 10 de la centrale 1 mobile ou pas, sont, de préférence, en communication de fluide les uns avec les autres, à l'aide des moyens étant, comprenant ou coopérant avec, une ou plusieurs ouvertures pratiquées en partie haute d'une ou plusieurs parois latérales ou d'extrémité, ouvertures munies ou pas de tubes ou de canalisations, et/ou une pu plusieurs pompes, permettant le déversement des eaux claires en surface des bacs 14, d'un bac 14 à l'autre.

Les moyens 12, 12a de réception des eaux, en particulier les bacs 14, qu'ils forment les fondations 10 de la centrale 1 mobile ou pas, peuvent comprendre ou coopérer avec une ou plusieurs pompes faisant office de moyens de collecte de l'eau recyclée, afin de l'acheminer depuis les bacs 14 jusqu'à des moyens de stockage pour une utilisation ultérieure, ou directement aux moyens de lavage, pour une utilisation en circuit fermé.

La centrale 1 mobile selon l'invention est utilisée pour la fabrication et la distribution de béton prêt à l'emploi. Elle est également utilisée pour le recyclage des eaux de ruissellement et/ou des eaux de lavage de tout ou une partie des moyens de production de béton et/ou des moyens de manutention et/ou de transport de béton.

De préférence, tout ou partie des moyens de production de béton, de l'enceinte 2, de l'ossature 6 ou les éléments formant l'ossature 6, de la ou des dalles 9 de support, de tout ou partie des moyens 11 de recyclage des eaux, comprennent, ou coopèrent avec, des moyens de manutention permettant leur manipulation pour leur assemblage ou leur desassemblage, comprenant par exemple des crochets, ou des orifices aptes à recevoir des crochets, pour une coopération avec une ou plusieurs élingues et un ou plusieurs appareils de levage.

La méthode de réalisation de la centrale 1 mobile selon l'invention comprend l'étape de prendre des moyens mobiles 11 de recyclage des eaux, de préférence tels que décrits précédemment, et de les disposer sur le sol, ou dans un terrassement préalablement réalisé dans le sol, de façon à former des fondations 10 aptes à recevoir et en fonctionnement recevant tout ou partie de ladite centrale 1 mobile, ou des moyens formant la centrale 1 mobile.

Les moyens 11 de recyclage peuvent être des moyens nouvellement fabriqués pour la centrale 1 mobile à assembler, ou bien provenir, pour tout ou partie, d'une ou plusieurs autres centrales 1 mobiles, qui est ou sont désassemblées, ou en-cours de désassemblage.

Dans les modes de réalisation dans lesquelles les moyens 11 de recyclage des eaux comprennent un ou plusieurs bacs 14, de préférence tels que décrits précédemment, comme moyens de réception 12, 12a des eaux de ruissellement et/ou des eaux de lavage de tout ou partie des moyens de production de béton et des eaux de ruissellement de l'enceinte 2, des eaux de lavage des matériels de manutention et/ou de transport de béton, ces bacs 14, pour au moins certains d'entre eux, sont disposés adjacents les uns aux autres et au contact les uns avec les autres pour former les fondations 10 de la centrale 1 mobile. Avantageusement, ils sont pourvus et disposés de façon à s'étendre au-delà de l'enceinte 2, pour entourer, ceinturer, partiellement ou entièrement, la centrale 1 mobile.

La méthode comprend, éventuellement, une étape de prendre un ou plusieurs bacs 14 de réception supplémentaires, de le ou les disposer à proximité des autres moyens 11 de recyclage des eaux, de préférence, de le disposer au contact d'au moins un des bacs 14 formant les fondations 10.

La méthode comprend la mise en communication de fluide les différents moyens 12, 12a de réception et/ou de décantation des eaux entre eux, en particulier les bacs 14 formant les fondations 10 et le ou des bacs 14 supplémentaires s'ils sont présents.

La méthode comprend, de préférence, l'étape de construire, ou prendre, et de fournir aux moyens 12, 12a de réception des eaux, des moyens d'accélération de la décantation des eaux, par exemple une rampe 17 inclinée.

La méthode comprend l'étape de prendre ou fabriquer, et fournir aux moyens 11 de recyclage, en particulier aux moyens 12, 12a de réception des eaux, des moyens 13 de criblage.

La méthode comprend l'étape de prendre, ou réaliser, des moyens de production et de distribution de béton, de préférence tels que décrits précédemment, et les assembler sur tout ou partie des fondations 10 formées par tout ou partie des moyens 11 de recyclage des eaux, pour former la centrale 1 mobile de production et de distribution de béton selon l'invention.

La méthode comprend l'étape de prendre ou réaliser, et de fournir à la centrale 1 mobile, des moyens de lavage de tout ou partie de la centrale 1 mobile, de l'intérieur et/ou l'extérieur de son enceinte 2, et/ou de tout ou partie des moyens qui la composent, et/ou des matériels de manutention et/ou de transport de béton.

La méthode comprend, de préférence, également l'étape de prendre, et fournir aux moyens 11 de recyclage des eaux, des moyens de collecte de l'eau recyclée par les moyens 12, 12a de récupération et/ ou de décantation des eaux.

La méthode comprend l'étape de prendre, et disposer au-dessus de tout ou partie des 11 moyens de recyclage, de préférence transversalement, une ou plusieurs dalles 9 de support comprenant ou faite de métal et/ou de béton, l'étape de prendre et disposer, ou construire, sur la ou les dalles 9 de support, de préférence une ossature 6 telle que décrite précédemment, pour soutenir les différents moyens formant la centrale 1 mobile et l'enceinte 2 de protection de la centrale 1 mobile.

La méthode comprend les étapes de prendre et disposer, au-dessus de la ou des dalles 9 de support, les moyens de production de béton, de préférence tels que décrits précédemment, et de prendre et disposer, ou construire, une enceinte 2, de préférence telle que décrite précédemment, autour des moyens de production de béton.

La méthode peut comprendre une étape de prendre ou construire, et fournir à la centrale 1 mobile, de préférence au niveau de l'enceinte 2, des moyens de récupération des eaux de pluie.

## Revendications

1. Centrale (1) mobile de fabrication de béton et de distribution dudit béton à un ou plusieurs matériels de manutention et/ou de transport de béton, ladite centrale (1) comprenant des moyens de production de béton et des moyens (11) de recyclage des eaux de ruissellement et/ou des eaux de lavage desdits moyens de production de béton et desdits matériels de manutention et/ou de transport de béton, lesdits moyens (11) de recyclage des eaux étant mobiles, et formant tout ou partie des fondations (10) de ladite centrale (1) mobile.

2. La centrale mobile (1) selon la revendication 1, dans laquelle les moyens (11) de recyclage des eaux sont aptes à recevoir des matériels et/ou des moyens de manutention et/ou de transport de béton, et forment un ou plusieurs chemins carrossables.

3. La centrale mobile (1) selon l'une quelconque des revendications précédentes, dans laquelle les moyens (11) de recyclage des eaux comprennent des moyens (13) de criblage de particules solides contenues dans les eaux à recycler.

4. La centrale mobile (1) selon la revendication 3, dans laquelle les moyens (13) de criblage sont ou comprennent un ou plusieurs panneaux (18) rigides, comprenant un ou plusieurs orifices pour le passage des eaux dans les moyens (11) de recyclage des eaux.

5. La centrale mobile (1) selon l'une quelconque des revendications précédentes, dans laquelle les moyens (11) de recyclage des eaux comprennent des moyens (12, 12a) de réception et de décantation des eaux, qui forment tout ou partie des fondations (10) de ladite centrale (1) mobile.

6. La centrale mobile (1) selon la revendication 5, comprenant une première série de moyens (12, 12a) de réception et de décantation des eaux, qui sont disposés bord à bord les uns avec les autres, et un ou plusieurs autres moyens (12, 12a) de réception et de décantation des eaux, disposés et s'étendant perpendiculairement à ladite première série de moyens (12, 12a) de réception et de décantation.

7. La centrale mobile (1) selon l'une quelconque des revendications 5 ou 6, dans laquelle les moyens (12, 12a) de réception et de décantation des eaux sont connectés entre eux en série par des moyens de mise en communication de fluide.

8. La centrale mobile (1) selon l'une quelconque des revendications 5 à 7, dans laquelle les moyens (12, 12a) de réception et de décantation des eaux comprennent des moyens d'accélération de la décantation desdites eaux.

9. La centrale mobile (1) selon l'une quelconque des revendications 5 à 8, dans laquelle les moyens (12, 12a) de réception des eaux comprennent un ou plusieurs bacs (14).

10. La centrale mobile (1) selon l'une quelconque des revendications précédentes, dans laquelle les moyens de production de béton sont regroupés sous une enceinte (2), s'étendant au-dessus des moyens (11) de recyclage des eaux.

11. La centrale mobile (1) selon la revendication 10, dans laquelle l'enceinte (2) comprend une base (5), comprenant une ossature (6) comprenant des poutres (7) structurelles formant un cadre et des poutrelles (8) de contreventement, ladite ossature (6) reposant, coopérant, ou étant fixée de manière réversible, à une ou plusieurs dalles (9) de support, faisant parties, ou coopérant, avec les fondations (10) de ladite centrale mobile (1).

12. Utilisation de la centrale mobile (1) de production de béton selon l'une quelconque des revendications précédentes, pour la fabrication et la distribution de béton prêt à l'emploi et le recyclage des eaux de ruissellement et/ou des eaux de lavage de tout ou une partie des moyens de production de béton et/ou des moyens de manutention et/ou de transport de béton.

13. Méthode de réalisation de la centrale mobile (1) de production de béton et de distribution dudit béton selon l'une quelconque des revendications 1 à 11, comprenant les étapes de :
- prendre des moyens (11) de recyclage des eaux de ruissellement et/ou des eaux de lavage qui sont mobiles, et les disposer sur le sol, ou dans un terrassement préalablement réalisé dans ledit sol, afin que tout ou partie desdits moyens (11) de recyclage forme tout ou partie des fondations (10) de ladite centrale (1) mobile,
- prendre des moyens de production et de distribution de béton, et les assembler sur tout ou partie desdites fondations (10), de façon à former tout ou partie de ladite centrale (1) mobile.

14. Méthode de réalisation de la centrale mobile (1) selon la revendication 9, dans laquelle les moyens (11) de recyclage des eaux comprennent des moyens (12, 12a) de réception et de décantation des eaux de ruissellement et/ou des eaux de lavage de tout ou partie des moyens de production de béton et/ou des matériels de manutention et/ou de transport de béton, ladite méthode comprenant une étape de mise en communication de fluide desdits moyens (12, 12a) de réception et de décantation desdites eaux entre eux.
